# EUROPEAN PATENT APPLICATION

(11) **EP 4 421 677 A1**
(43) Date of publication of application: **28.08.2024**
(21) Application number: 23157985.5
(22) Date of filing: 22.02.2023
(51) Int. Cl.: G06K 7/10, G01S 5/02, G01S 13/75, G06Q 10/087, G07C 9/00, G08B 13/24

(54) **DEVICE AND METHOD FOR LOCALIZING AN RFID TAG**

(71) Applicant: Turck Holding GmbH, 58553 Halver (DE)
(72) Inventor: Lewald, Thomas, 47199 Duisburg (DE); Schnabel, Hendrik, 45359 Essen (DE); Nyman, Henrik, 02320 Espoo (FI)
(74) Representative: Tautz & Schuhmacher

(57) **Abstract**

Provided is a device for localizing an RFID tag, wherein the device is configured to determine a location of the RFID tag based on RFID tag responses received via two antennas at the device in response to one RFID tag request.

## Description

The present disclosure is directed to a device for localizing an RFID tag, an RFID tag reader system comprising the device, a computer-implemented method configured for controlling the device, a computer program comprising instructions which, when the program is executed by a computer, cause the computer to carry out the method and a computer readable medium comprising instructions which, when the instructions are executed by a computer, cause the computer to carry out the method.

The following discussion of prior art is not to be construed as an admission that such prior art is generally known or is part of the general knowledge in the technical field underlying the disclosure.

Radio-frequency identification (RFID) uses electromagnetic fields to automatically identify and track RFID tags that may be attached to objects. Those objects may be boxes in warehouses for example.

A typical RFID tag comprises a radio transponder, a radio receiver and a transmitter. When triggered by an electromagnetic interrogation pulse from a nearby RFID tag reader (device), the RFID tag transmits digital data, usually an identifying inventory number, back to the RFID tag reader. The number can be used to identify and track inventory goods.

In general, there are two different kinds of RFID tags: passive and active RFID tags. Passive RFID tags are powered by energy from the RFID tag reader's interrogating radio waves. Active RFID tags are powered by a battery and thus can be read at a greater range from the RFID tag reader, e.g., up to hundreds of meters. Insofar the present disclosure refers to RFID tags, passive RFID tags are meant.

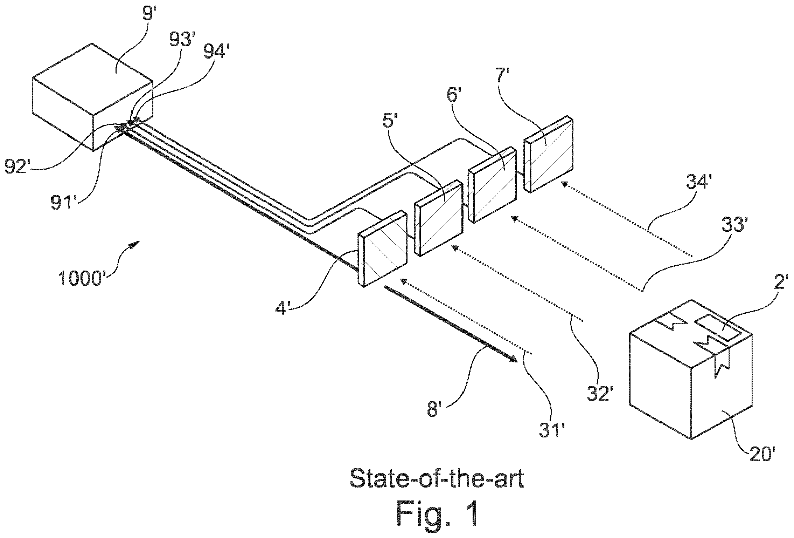

In figure 1 an RFID tag reader system 1000' according to the state of the art is shown. The RFID tag reader system 1000' comprises an RFID tag reader 9' as well as four antennas 4' - 7', wherein the four antennas 4' - 7' are connected to the RFID tag reader 9', respectively. The RFID tag reader 9' comprises a dedicated port 91' - 94' for each one of the four antennas 4' - 7'. In order to communicate with an RFID tag 2' which is mounted on an object 20', the RFID tag reader 9' uses only one of the four antennas 4' - 7' at a time to send (i.e., to output) an RFID request 8' to the RFID tag 2'. That is, there is only one port of the four ports 91' - 94' active at a time for sending out the RFID request 8' to the RFID tag 2'. In response to the received RFID request 8', the RFID tag 2' sends out an RFID tag response signal. This RFID tag response signal is received as an RFID tag response 31' - 34' at each one of the four antennas 4' - 7', respectively. However, since only one of the ports 91' - 94' of the RFID tag reader device 9' is active at a time, more specifically, in this example the port via 91' via which the RFID tag request 8' was sent out to the antenna 4', only the RFID tag response 31' that is received via the antenna 4' via which the RFID tag request 8' was sent out is used by the RFID tag reader 9'. That is, the RFID tag reader 9' sequentially uses the multiple antennas 4' - 7' connected to the RFID tag reader 9' for communication with the RFID tag 2'.

As already mentioned above, the RFID tag reader 9' may use the received RFID tag response 31' to identify the RFID tag 2' thereby identifying the object 20' to which the RFID tag 2' is attached.

Additionally or alternatively to the above mentioned identification of the object 20' to which the RFID tag 2' is attached, the RFID tag reader 9' may determine a location of the RFID tag 2' (and thus of the object 20' to which the RFID tag 2' is attached) based on the one RFID tag response 31' that was received in response to the RFID tag request 8' sent out via said antenna 4' that is connected to the active port 91' of the RFID tag 9'.

In conclusion, according to the state of the art the RFID tag reader 9' may localize the RFID tag 2' only based on one RFID tag response 31' at a time.

In the light of the above, it is one object of the present disclosure to provide a method and a device, both of which are configured to enrich the prior art.

This object is solved by the features of the independent claims, respectively. The dependent claims contain optional further developments of the disclosure.

Therefore, the object is solved by a device for localizing an RFID tag. The device is configured to determine a location of the RFID tag based on RFID tag responses received via at least two antennas at the device in response to the one RFID tag request.

The device may be physically represented by one or multiple devices. The device(s) may be physically separated from the RFID tag reader, i.e., may be a physical different entity being solely connected to the RFID tag reader via a wired and/or wireless connection for transmitting signals between the device(s) and the RFID tag reader.

As far as this disclosure refers to an RFID tag reader, a device that is configured to send (i.e., to output) an RFID request to an RFID tag and to receive an RFID tag response in response to the sent RFID tag request is meant. Moreover, the RFID tag reader may be configured to identify the RFID tag based on the received RFID tag response(s). The RFID tag reader may be an RFID tag reader as described above with reference to the state of the art, especially figure 1. The same applies mutatis mutandis to the RFID tag.

So far the terms RFID tag request and RFID tag response are used in this description, both terms refer to an RFID signal. The RFID signal may be or comprise an electromagnetic interrogation pulse. The RFID signal may have a frequency band as defined in ISO/IEC 180000-63, e.g., a frequency band between 860 - 960 Mhz.

In other words, it is suggested to not only use one of the RFID tag responses that is received in response to the RFID tag request sent out to the RFID tag but rather to use at least two of these RFID tag responses that are received by the least two different antennas of the RFID system.

Using at least two, optionally three, four or all of the received RFID tag responses allows for a more accurate localization of the RFID tag.

In the following further developments of the above-described device are explained in detail.

The device may be configured to determine a movement of the RFID tag based on the determined location of the RFID tag.

More specifically, the device may be configured to determine the location of the RFID tag over time thereby getting information about the movement of the RFID tag. The movement of the RFID tag may be for example a direction of movement of the RFID tag, an acceleration and/or a speed of the RFID tag, and/or an information if the RFID tag passed from one predefined region into another predefined region, e.g. through a gate. The antennas may be installed at the gate. The antennas may be connected to the RFID tag reader via the device.

The device may be configured to output the RFID tag request via one antenna of the at least two antennas being connectable to the device.

In other words, the device may output the RFID tag request in the above-described manner with respect to figure 1. Therefore, the device acts similar to the RFID tag reader and thus does not compromise or impact the identification of the RFID tag by the RFID tag reader.

The device may be configured to receive the RFID tag request from an RFID tag reader being connectable to the device.

In other words, the device may be placed in between the RFID tag reader and the antennas connected to the RFID tag reader. In this capacity, the device may act as a transceiver configured to receive the RFID tag request from the RFID tag reader and to output the RFID tag request to the antenna which would be normally connected to the respective port of the RFID tag reader. In the other communication direction, i.e., from the RFID tag towards the RFID tag reader, the device may (additionally or alternatively) act as a transceiver. Therefore, the device may receive the RFID tag responses and send at least one of them to the RFID tag reader, optionally output only the one of the RFID tag responses that was received via the antenna via which the RFID tag request was output to the RFID tag, to the respective port of the RFID tag reader via which the RFID tag request was sent from the RFID tag reader to the device.

That is, the device may be configured to output the RFID tag response of the RFID tag responses received via the one antenna of the at least two antennas via which the RFID tag request was sent to the RFID tag.

Moreover, the device may comprise an RFID tag reader communication interface configured for communication with the RFID tag reader, an antenna communication interface configured for communication with the RFID tag via the at least two antennas being connectable to the antenna communication interface. The RFID tag reader communication interface may comprise multiple ports for the at least two antennas, each one of the ports of the RFID tag reader communication interface being dedicated to one of the at least two antennas. The antenna communication interface may comprise multiple ports for the at least two antennas, each one of the ports of the antenna communication interface being dedicated to the one of the at least two antennas and being connected to the respective port of the RFID tag reader communication interface that is dedicated to the same antenna.

The device may be configured to receive the RFID tag request from the RFID tag reader at one port of the RFID tag reader communication interface. The device may be configured to output the received RFID tag request via the port of the antenna communication interface that is dedicated to the same antenna as the port of the RFID tag reader communication interface via which the RFID tag request was received. The device may be configured to receive via the multiple ports of the antenna communication interface the RFID tag responses. The RFID tag responses may be received by the at least two antennas being connected to the multiple ports of the antenna communication interface. The device may be configured to determine the location of the RFID tag based on the received tag responses. The device may be configured to output the received RFID tag response received via the port of the antenna communication interface that is dedicated to the same antenna of the at least two antennas as the port of the RFID tag reader communication interface via which the RFID tag request was received to the RFID tag reader. The RFID tag response may be output to the RFID tag reader via the port of the RFID tag reader communication interface via which the RFID tag request was received.

In other words, the device may be compatible with the above-described known RFID tag reader system. Therefore, the device may only connect through or loop in the respective RFID signals received from the RFID tag reader as well as from the antennas but may on the other hand use all the RFID tag responses/signals received from the antennas during one cycle of communication between the RFID tag reader and the RFID tag in order to localize the RFID tag.

More specifically, the device may be configured to receive the RFID tag request from the RFID tag reader at a first port of the RFID tag reader communication interface. The device may be configured to output the received RFID tag request via a first port of the antenna communication interface to a first antenna. The device may be configured to receive via the first antenna at the first port of the antenna communication interface a first RFID tag response and via the second antenna at the second port of the antenna communication interface a second RFID tag response. That is, both, the first and the second RFID tag response, are received in response to only one RFID tag request sent out via only one of the multiple antennas being connectable/being connected to the device.

The device may be configured to determine the location of the RFID tag based on the received first and the received second RFID tag response. That is, both of the received RFID tag responses may be used to determine the location of the RFID tag.

The device may be configured to output the first RFID tag response, more specifically, only the first RFID tag response, via the first port of the RFID tag reader communication interface to the RFID tag reader as the RFID tag response.

The above-given description applies to one cycle of communication between the RFID tag reader and the RFID tag. However, it is to be understood that the above-given description is also true for the other (in case of four antennas three) cycles connected to the device and via the device to the RFID tag reader.

The determining of the location of the RFID tag based on the received RFID tag responses may be done based on a signal travel time of the RFID tag responses, an angle under which the RFID tag responses were received at the at least two antennas, and/or a phase and/or an amplitude of the received RFID tag responses. The determining of the location is done by or in the device.

Furthermore, the disclosure is directed to an RFID tag reader system. The system comprises and RFID tag reader, at least two antennas, and the above-described device. The device is connected to the RFID tag reader and to the at least two antennas.

The above-given description with respect to the device for localizing the RFID tag applies mutatis mutandis to the RFID tag reader system and vice versa.

Furthermore, the disclosure is directed to a computer-implemented method configured for controlling a device for localizing an RFID tag. The device may be the above-described device. The method comprises determining a location of the RFID tag based on the RFID tag responses received via at least two antennas in response to one RFID tag request.

The method may comprise determining a movement of the RFID tag based on the determined location of the RFID tag.

The method may comprise to send the RFID tag request via one antenna of the at least two antennas being connectable to the device.

The method may comprise to receive the RFID tag request from an RFID tag reader being connectable to the device.

The method may comprise to output the RFID tag response of the RFID tag responses received via the one antenna of the at least two antennas via which the RFID tag request was sent out to the RFID tag.

A computer-implemented method may be a method where at least one step of the method is at least partly performed by a computer.

The above-given description with respect to the device and the system applies mutatis mutandis to the method and vice versa, respectively.

Furthermore, a computer program is provided, wherein the computer program comprises instructions which, when the program is executed by a computer, cause the computer to carry out, at least in part, the method described above.

The computer may be a control device configured to control operation of the above-described device for localizing the RFID tag. The computer program may be, at least partly, a firmware of the computer. The term "firmware" may be understood to describe a software that is embedded in electronic devices, such as the computer in this case, where it performs basic functions. The firmware can take intermediate positions between a hardware of the computer (i.e., the physical part of the computer) and optional existing application software. The firmware may be stored in a memory of the computer. The memory may be a flash memory, an EPROM, an EEPROM, and/or a ROM.

The above-given description with respect to the method, the system and the device applies mutatis mutandis to the computer program and vice versa, respectively.

Furthermore, the disclosure refers to a computer-readable medium. The computer-readable medium comprises instructions which, when the instructions are executed by a computer, cause the computer to carry out, at least in part, the above-described method.

The computer-readable medium may comprise the above-described computer program.

The computer-readable medium may be a computer-readable storage medium. That is, the computer-readable medium may be for example any digital data storage device, such as a USB flash drive, a hard drive, a flash memory, a CD-ROM, an SD card or an SSD card.

The computer program does not necessarily need to be stored on such a computer-readable storage medium in order to be provided to the computer, but may be obtained externally via the internet or otherwise.

The computer-readable medium may be a data signal carrying instructions which, when the instructions are executed by a computer, cause the computer to carry out the above-described method at least partly.

The above-given description with respect to the method, device, the system and the computer program applies mutatis mutandis to the computer-readable medium and vice versa, respectively.

In addition, it should be noted that, unless otherwise defined, all technical and scientific terms used herein have the same meaning as commonly understood by one skilled in the art to which this disclosure pertains. Where there is more than one definition of a term, the definition in this application shall prevail unless otherwise indicated.

Wherever the expressions "by way of example", "such as", "e.g.", and the like are used, the same shall be construed as being followed by the expression "and without limitation", unless otherwise expressly stated. Similarly, "an example", "exemplary" and the like shall be construed as not limiting or as a non-exhaustive list.

For numerical indications, they are to be understood as both exhaustive and non-exhaustive, i.e., for example "a part" is to be understood as "at least one part and/or exactly one part" and "four antennas" is to be understood as "at least four antennas and/or exactly four antennas". However, the term "one RFID tag request" is to be understood as "exactly one RFID tag request".

The term "substantially" allows for variations that do not adversely affect the intended purpose. Descriptive terms shall be understood to be modified by the term "substantially" even if the term "substantially" is not expressly stated.

The terms "comprising" and "including" and "having" and "with" and the like are used interchangeably and have the same meaning.

Consequently, unless the context clearly or explicitly requires otherwise, the words "comprising", "including" and the like in the description and the claims are to be understood in an inclusive sense and not in an exclusive or exhaustive sense, i.e., in the sense of "including but not limited to".

Hereinafter an optional embodiment of the disclosure will be described with reference to figures 2 to 5.
- Fig. 1: shows schematically an RFID (tag) reader system according to the state of the art,
- Fig. 2: shows schematically an RFID (tag) reader system according to the disclosure,
- Fig. 3: shows schematically the RFID tag reader system of Fig. 2 in a more detailed manner, and
- Fig. 4: shows a flowchart of a method for controlling an RFID tag localizing device/device for localizing an RFID tag according to the disclosure.
- Fig 5: shows a gate comprising the RFID tag reader system of Figs. 2 and 3.

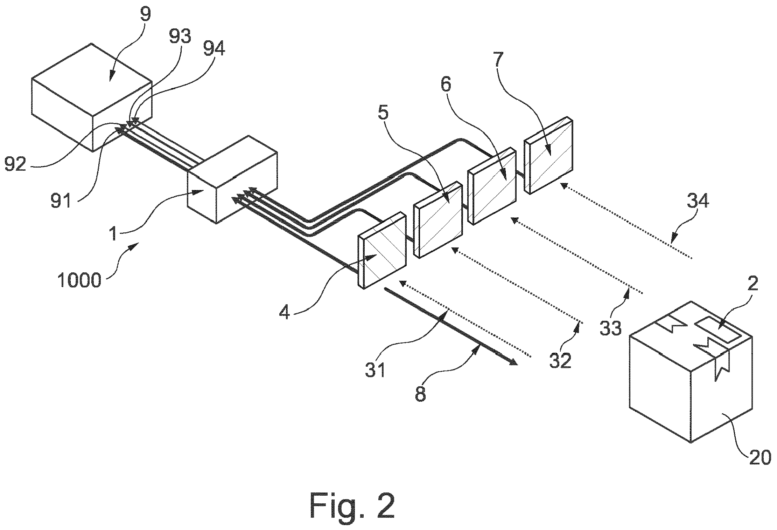

The RFID tag reader system 1000 shown in Fig. 2 comprises an RFID tag reader 9, a device for localizing an RFID tag 2, and four passive antennas 4-7. The RFID tag reader 9 is connected to the device 1, and the antennas 4-7 are also connected to the device 1.

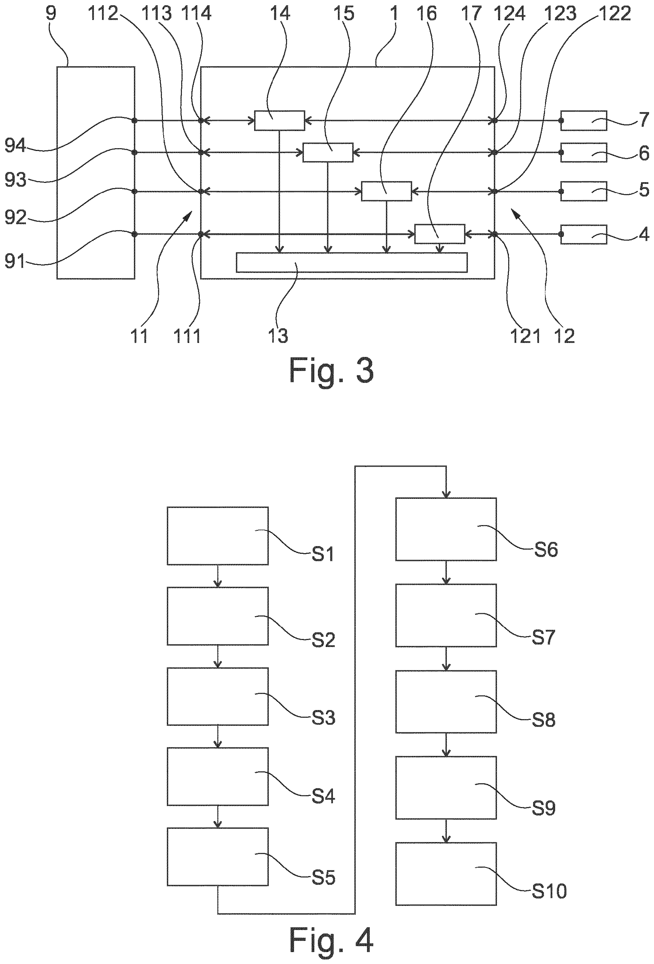

As can also be gathered from Fig. 3, the device 1 comprises two interfaces 11, 12. The first one of the two interfaces 11, 12 is a so-called RFID tag reader communication interface 11 and the other one of the interfaces is a so-called antenna communication interface 12.

The RFID tag reader communication interface 11 comprises four ports 111 -112. Each one of the four ports 111 - 114 of the RFID tag reader communication interface 11 is connected, e.g., via a coaxial connection, to one port 91 - 94 of the RFID tag reader 9. The RFID tag reader communication interface 11 is provided for communication between the RFID tag reader 9 and the device 1. More specifically, the device 1 is configured to bidirectionally communicate with the RFID tag reader 9 through the RFID tag reader communication interface 11.

The antenna communication interface 12 also comprises four ports 121 -124, wherein each one of the four ports 121 - 124 of the antenna communication interface 12 is connected to one of the passive antennas 4-7. Analogously to the RFID tag reader communication interface 11, the antenna communication interface 12 is also provided for bidirectional communication with the antennas 4-7.

The antennas 4-7 may be connected to the antenna communication interface 12 via a coaxial connection, respectively.

Each one of the ports 111 - 114 of the RFID tag reader communication interface 11 is connected to one single port 121 - 124 of the antenna communication interface 12. The RFID tag reader communication interface 11 acts as a blueprint of the antennas 4 - 7 that are connected to the RFID tag reader 9 in conventional RFID tag reader systems (see for example Fig. 1, RFID tag reader system 1000'). The antenna communication interface 12 analogously acts as a blueprint of a conventional RFID tag reader communication interface via which the antennas 4 - 7 are normally connected to the RFID tag reader 9. Therefore, the device 1 does not affect the normal/conventional communication between the RFID tag reader 9 and the RFID tag 2, e.g., for identifying the RFID tag 2.

The device 1 comprises a signal processing unit 13, wherein the signal processing unit 13 is connected via a coupler 14 - 17 to each one of the ports 111 - 114 of the RFID tag reader communication interface as well as to each one of the ports 121 - 124 of the antenna communication interface 12, respectively.

The signal processing unit 13 of the device 1 is configured to carry out a method for controlling the device 1, as explained in further detail below also with respect to Fig. 4 showing a flowchart of this method.

The following description of the method is given with respect to only one cycle of communication between the RFID tag reader 9 and the RFID tag 2. However, the description is also true for the other cycles of such an RFID-reader-tag-communication.

In a first step S1 of the method, the RFID tag reader 9 outputs an RFID tag request 8 via one of its ports, here the first port 91, to one of the ports, here also the first port 111, of the RFID tag reader communication interface 11 of the device 1.

In a second step S2, of the method the device 1 loops through the received RFID tag request 8 thereby outputting the RFID tag request 8 through the first port 121 of the antenna communication interface 12 that is connected to the first port 111 of the RFID tag reader communication interface 11.

In a third step S3 of the method, the RFID tag request 8 is received at one antenna 4 of the four antennas 4-7, here the first antenna 4, and is output by the first antenna 4 to the RFID tag 2.

In a fourth step S4 of the method, the RFID tag 2 outputs a tag signal in response to the received RFID tag request 8.

In a fifth step S5 of the method, the tag signal is received as an RFID tag response 31 - 34 at each one of the antennas 4-7, respectively.

In a sixth step S6 of the method, all of the four the RFID tag responses 31 - 34 are received via the ports 121 - 124 of the antenna communication interface 12 at the device 1.

In a seventh step S7 of the method, the received RFID tag responses 31 - 34 are input via the respective coupler 14 - 17 to the signal processing unit 13 of the device 1.

In an eighth step S8 of the method, the signal processing unit 13 determines based on all of the received RFID tag signals 31 - 34 a localization of the RFID tag 2, i.e., localizes the RFID tag 2 based on all of the four RFID tag responses 31 - 34.

That is, the signal processing unit 13 may determine the location of the RFID tag 2 based on all of the received RFID tag responses 31 - 34. Thereby, the signal processing unit may determine a signal travel time of the respective RFID tag responses 31 - 34, a respective angle under which the RFID tag responses 31 - 34 were received at the respective antenna 4-7, and/or a phase and/or an amplitude of the received RFID tag responses. The processing unit is able to calculate the localization data for each RFID tag, if it can use time of flight, angel of arrival and/or a phase and/or amplitude of the received RFID tag responses from two or more antennas at the same time.

In a ninth step S9 of the method, only the RFID tag response 31 that was received via the first port 121 of the antenna communication interface 12 is output via the first port 111 of the RFID communication interface 11 to the RFID tag reader 9. It is thus possible that the signal processing unit 13 controls the couplers 14 - 17 such that only the coupler 17 which is connected to the first port 121 of the antenna communication interface 12 loops through the received RFID tag response 31 and controls the other couplers 14 - 16 such that the other received RFID tag responses 32 - 34 are not looped through to the respective port 112 114 of the RFID tag reader communication interface 11 and thus are not output to the RFID tag reader 9.

In a tenth step S10 of the method, the RFID tag reader 9 may identify the RFID tag 2 based on the RFID tag response 31 received at the RFID tag reader 9.

As already indicated above, the description with respect to Fig. 4 only covers one cycle of communication between the RFID tag reader 9 and the RFID tag 2 via the device 1 as well as the antennas 4-7. However, during the subsequent cycles the other ports 92 - 94, 112 - 114, 122 - 124 of the respective communication interfaces 11, 12 may be used one after the other to communicate with the RFID tag 2, wherein during each cycle and thus irrespective of the active antenna 4 - 7 all the RFID tag responses 31 - 34 received at the antennas 4 - 7 are used to determine the location/to localize the RFID tag 2.

This may be summarized in a more general manner as follows: The method may comprise during each cycle of communication between the RFID tag reader 9 and the RFID tag 2 via the device 1 the following:
- receive the RFID tag request 8 from the RFID tag reader 9 at one port 111 - 114 of the RFID tag reader communication interface 11,
- output the received RFID tag request 8 via the port 121 - 124 of the antenna communication interface 12 that is dedicated to the same antenna 4 - 7 as the port 111 - 114 of the RFID tag reader communication interface (11) via which the RFID tag request 8 was received,
- receive via the multiple ports 121 - 124 of the antenna communication interface 12 the RFID tag responses (31 - 34), the RFID tag responses 31 - 34 were received by the at least two antennas 4 - 7 being connected to the multiple ports 121 - 124 of the antenna communication interface 12,
- determine the location of the RFID tag (2) based on the received tag responses 31 - 34, and
- output the received RFID tag response 31 - 34 received via the port 121 - 124 of the antenna communication interface 12 that is dedicated to the same antenna 4 - 7 of the at least two antennas 4 - 7 as the port 111 - 114 of the RFID tag reader communication interface 11 via which the RFID tag request 8 was received to the RFID tag reader 9, wherein the RFID tag response 31 - 34 is output to RFID tag reader 9 via the port 111 - 114 of the RFID tag reader communication interface 11 via which the RFID tag request 8 was received.

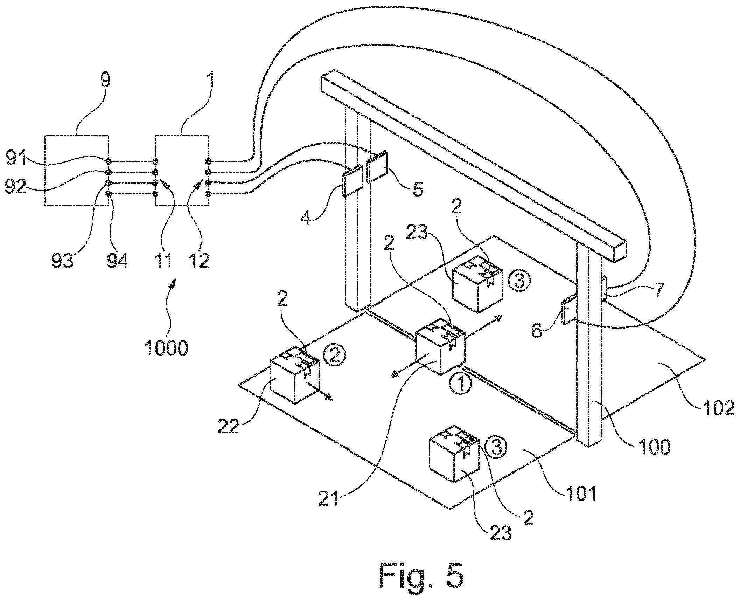

In the following some concrete implementations of the disclosure are described for exemplary purposes with respect to Fig. 5. In Fig. 5 a gate 100 is shown wherein at the gate 100 the four antennas 4 - 7 are installed. On one side of the gate 100 a first predefined area 101 is shown and on the other side of the gate a second predefined area 102 is shown.

In a first exemplary use case of the disclosure an object 21 with an RFID tag 2 thereon passes the gate 100, i.e. goes from the first predefined area 101 into the second predefined area 102. Using the device 1 in the above-described manner, the tag 2 and thus the object 21 is localized and the signal processing unit 13 of the device 1 recognizes that the tag 2 and thus the object 21 passes the gate 100. Such a process can be seen for example as a "booking" (e.g., when an object leaves the warehouse and is loaded into a truck or unloaded from the truck and moved into the warehouse).

In a second exemplary use case, an object 22 with a tag 2 thereon does not pass the gate 100 but moves close to the gate 100 in the first area 101. In real world scenarios, these kinds of readings are hard to distinguish from a scenario where the object 21 passes the gate 100 (as explained above). Here, the device 1 and method according to the disclosure may be used to distinguish between the case where the object 21 passes the gate 100 and the case where the object 22 moves close to the gate 100 but does not pass the gate 100. Here, using all of the RFID tag responses 31 - 34 in order to localize the tag 2 allows for a more accurate localization of the tag 2 and thus enables the device 1 to distinguish between these two scenarios.

Same is true for an exemplary third scenario/use case, where an object 23 is close to the gate 100 but is a static object which does not move through the gate 100. Also here, using the device 1 according to the disclosure, the tag 2 on the object 23 may be localized in a very accurate manner and thus the case of the static object 23 in the predefined areas 101, 102 may be distinguished from the first scenario (and optionally the second scenario) described above, where the object 21 passes the gate 100 (or moves close to the gate 100).

### Reference signs

- 1: device for localizing an RFID tag
- 11: RFID tag reader communication interface
- 112 - 114: ports of the RFID tag reader communication interface
- 12: antenna communication interface
- 121 - 124: ports of the antenna communication interface
- 14 - 17: couplers for coupling the ports of the RFID tag reader communication interface to the ports of the antenna communication interface and to a signal processing unit
- 13: signal processing unit
- 2: RFID tag
- 20 - 23: physical object
- 31 - 34: RFID tag responses
- 4-7: antenna
- 8: RFID tag request
- 9: RFID tag reader
- 91 - 94: RFID tag reader ports
- 100: gate
- 1000: RFID tag reader system

- S1 - S10: method steps

- 2': RFID tag
- 20`: physical object
- 31' - 34': RFID tag response
- 4' - 7': antennas
- 8': RFID tag request
- 9': RFID tag reader
- 91' - 94': ports of the RFID tag reader

## Claims

1. Device (1) for localizing an RFID tag (2), **characterized in that** the device (1) is configured to determine a location of the RFID tag (2) based on an RFID tag responses (31 - 34) received via at least two antennas (4 - 7) at the device (1) in response to one RFID tag request (8).

2. Device (1) according to claim 1, **characterized in that** the device (1) is configured to determine a movement of the RFID tag (2) based on the determined location of the RFID tag (2).

3. Device (1) according to claim 1 or 2, **characterized in that** the device (1) is configured to send the RFID tag request (8) via one antenna (4) of the at least two antennas (4 - 7) being connectable to the device (1).

4. Device (1) according to any of claims 1 to 3, **characterized in that** the device (1) is configured to receive the RFID tag request (8) from an RFID tag reader (9) being connectable to the device (1).

5. Device (1) according to claim 3 or 4, **characterized in that** the device (1) is configured to output the RFID tag response (31) of the RFID tag responses (31 - 34) received via the one antenna (4) of the at least two antennas (4 - 7) via which the RFID tag request (8) was sent out to the RFID tag (2).

6. Device (1) according to claim 5, **characterized in that** the device (1) comprises:
- an RFID tag reader communication interface (11) configured for communication with the RFID tag reader (9), and
- an antenna communication interface (12) configured for communication with the RFID tag (2) via the at least two antennas (4 - 7) being connectable to the antenna communication interface (12),
- wherein the RFID tag reader communication interface (11) comprises multiple ports (111 - 114) for the at least two antennas (4 - 7), each one of the ports (111 - 114) of the RFID tag reader communication interface (11) being dedicated to one of the at least two antennas (4 - 7),
- wherein the antenna communication interface (12) comprises multiple ports (121 - 124) for the at least two antennas (4 - 7), each one of the ports (111 - 114) of the antenna reader communication interface (12) being dedicated to one of the at least two antennas (4 - 7) and being connected to the respective port (111 - 114) of the RFID tag reader communication interface that is dedicated to the same antenna (4 - 7),
- wherein the device (1) is configured to:
- receive the RFID tag request (8) from the RFID tag reader (9) at one port (111 -114) of the RFID tag reader communication interface (11),
- output the received RFID tag request (8) via the port (121 - 124) of the antenna communication interface (12) that is dedicated to the same antenna (4 - 7) as the port (111 - 114) of the RFID tag reader communication interface (11) via which the RFID tag request (8) was received,
- receive via the multiple ports (121 - 124) of the antenna communication interface (12) the RFID tag responses (31 - 34), the RFID tag responses (31 - 34) were received by the at least two antennas (4 - 7) being connected to the multiple ports (121 - 124) of the antenna communication interface (12),
- determine the location of the RFID tag (2) based on the received tag responses (31 - 34), and
- output the received RFID tag response (31 - 34) received via the port (121 - 124) of the antenna communication interface (12) that is dedicated to the same antenna (4 - 7) of the at least two antennas (4 - 7) as the port (111 - 114) of the RFID tag reader communication interface (11) via which the RFID tag request (8) was received to the RFID tag reader (9), wherein the RFID tag response (31 - 34) is output to RFID tag reader (9) via the port (111 - 114) of the RFID tag reader communication interface (11) via which the RFID tag request (8) was received.

7. Device (1) according to any of claims 1 to 6, **characterized in that** determining the location of the RFID tag (2) based on the received RFID tag responses (31 - 34) is done based on a run-time of the RFID tag responses (31 - 34), an angle under which the RFID tag responses (31 - 34) where received at the at least two antennas (4 - 7), and/or a phase and/or an amplitude of the received RFID tag responses (4 - 7).

8. RFID tag reader system (1000), **characterized in that** the system (1000) comprises:
- an RFID tag reader (9),
- at least two antennas (4 - 5), and
- the device (1) according to any one of claims 1 to 7, the device (1) being connected to the RFID tag reader (9) and the at least two antennas (4 - 7).

9. Computer-implemented method configured for controlling a device (1) for localizing an RFID tag (2), **characterized in that** the method comprises determining a location of the RFID tag (2) based on RFID tag responses (31 - 34) received via at least two antennas (4 - 7) in response to one RFID tag request (8).

10. Method according to claim 9, **characterized in that** the method comprises determining a movement of the RFID tag (2) based on the determined location of the RFID tag (2).

11. Method according to claim 9 or 10, **characterized in that** the method comprises to send the RFID tag request (8) via one antenna (4) of the at least two antennas (4 - 7) being connectable to the device (1).

12. Method according to any of claims 9 to 11, **characterized in that** the method comprises to receive the RFID tag request (8) from an RFID tag reader (9) being connectable to the device (1).

13. Method according to claim 11 or 12, **characterized in that** the method comprises to output the RFID tag response (31) of the RFID tag responses (31 - 34) received via the one antenna (4) of the at least two antennas (4 - 7) via which the RFID tag request (8) was sent out to the RFID tag (2).

14. A computer program comprising instructions which, when the program is executed by a computer, cause the computer to carry the method according to any of claims 9 to 13.

15. A computer-readable medium comprising instructions which, when the instructions are executed by a computer, cause the computer to carry the method according to any of claims 9 to 13.
